(19) Europäisches Patentamt / European Patent Office / Office européen des brevets

(11) **EP 4 032 998 A1**

(12) **EUROPEAN PATENT APPLICATION**
published in accordance with Art. 153(4) EPC

(43) Date of publication:
**27.07.2022 Bulletin 2022/30**

(21) Application number: **20864921.0**

(22) Date of filing: **15.09.2020**

(51) International Patent Classification (IPC):
**C22C 38/00** (2006.01)    **B23K 20/00** (2006.01)
**C21D 8/00** (2006.01)    **C21D 9/00** (2006.01)
**C22C 38/16** (2006.01)    **C22C 38/58** (2006.01)

(52) Cooperative Patent Classification (CPC):
**B23K 20/00; C21D 8/00; C21D 9/00; C22C 38/00; C22C 38/16; C22C 38/58**

(86) International application number:
**PCT/JP2020/034960**

(87) International publication number:
**WO 2021/054335 (25.03.2021 Gazette 2021/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **20.09.2019 JP 2019171219**

(71) Applicant: **JFE Steel Corporation Tokyo 100-0011 (JP)**

(72) Inventors:
• **KURONUMA, Yota**
  **Tokyo 100-0011 (JP)**
• **OHTSUBO, Hirofumi**
  **Tokyo 100-0011 (JP)**

(74) Representative: **Grünecker Patent- und Rechtsanwälte PartG mbB Leopoldstraße 4 80802 München (DE)**

(54) **CLAD STEEL AND METHOD FOR MANUFACTURING SAME**

(57)    A clad steel including a base steel plate and a cladding metal of an alloy, the cladding metal being bonded to the base steel plate, in which the base steel plate has a chemical composition containing, by mass%, C: 0.06% to 0.15%, Si: 0.10% to 0.60%, Mn: 1.20% to 1.60%, P: 0.030% or less, S: 0.010% or less, Al: 0.005% to 0.050%, Mo: 0.05% to 0.15%, Nb: 0.010% to 0.040%, Ti: less than 0.005%, N: 0.0010% to 0.0100%, Cu: 0.10% to 0.50%, and Ni: 0.10% to 0.50%, the balance being Fe and unavoidable impurities, the ratio by mass% of Nb to N, i.e., Nb/N, is 2.0 to 10.0, Ceq represented by equation (1) below is in the range of 0.38 to 0.45, the microstructure of the base steel sheet contains a pearlite phase in an area fraction of 2% or less, a bainite phase and/or a martensitic phase in a total area fraction of 13% to 35%, and a ferrite phase in an area fraction of 65% to 85%, and the base steel plate has a maximum ferrite grain diameter of 45 μm or less,

$$Ceq = C + Mn/6 + (Cu + Ni)/15 + Mo/5 \cdots (1).$$

EP 4 032 998 A1

**Description**

Technical Field

The present invention relates to a clad steel used for, for example, reaction vessels in chemical plants and to a method for manufacturing the clad steel.

Background Art

Clad steel is made by metallurgical bonding of dissimilar metals. Unlike plating, clad steel is not separated, and can attain new characteristics that are impossible to achieve with a single metal or alloy. Clad steel can be made to perform the same function as a solid material, in which the plate is made of a single metal or alloy throughout its entire thickness, by selecting a cladding metal having a function that suits the purpose of each use environment. For example, high-alloy clad steel in which two different metal materials having different properties, i.e., a high-corrosion-resistant high-alloy steel serving as a cladding metal and an ordinary steel serving as a base metal, are bonded together is known. Furthermore, carbon steel and low-alloy steel suitable for harsh environments requiring high toughness and high strength other than corrosion resistance can be used for the base metal of clad steel.

Clad steel has the advantage of being both economical and functional. This is because the amounts of alloying elements, such as Cr, Ni, and Mo, used in clad steel are lower than those of solid steel, the same anti-rust performance as that of solid steel can be ensured, and the clad steel has the same strength and toughness as carbon steel and low-alloy steel. In view of the above, clad steel including a high-alloy cladding metal is considered to be very useful functional steel. The need therefor has recently been increasing in various industrial fields. In addition, with the recent increase in the use of clad steel in low-temperature environments, such as cold regions, clad steel has been required to have higher strength and toughness of the base metal.

Conventionally, clad steel to improve strength and toughness has been reported (see, for example, Patent Literature 1). Patent Literature 1 discloses a clad steel that has superior toughness as is solution-treated by heating to the solution treatment temperature, gradually cooling the base steel to a BN precipitation temperature or lower to precipitate BN, and performing quenching.

Citation List

Patent Literature

PTL 1: Japanese Patent No. 4252645

Summary of Invention

Technical Problem

When clad steel is used, for example, for a reaction vessel in a chemical plant, stress relief annealing is sometimes performed after welding the clad steel in order to reduce residual stress in the weld zone. However, in the case of the clad steel described in Patent Literature 1 above, after the stress relief annealing, the strength and/or toughness may deteriorate disadvantageously because of the morphological change of carbides in the base steel.

In light of the above circumstances, the present invention aims to provide a clad steel having improved strength and toughness even after stress relief annealing by specifying the composition and the microstructure of the base steel, and a method for manufacturing the clad steel. Solution to Problem

To achieve the above object, the inventors have conducted studies on the relationship among the base steel composition, microstructure, strength, and toughness, and have found that the deterioration of toughness is caused by the coarsening of ferrite grains. Furthermore, the inventors have found that the pearlite phase fraction in the base steel microstructure correlates with the maximum ferrite grain diameter and that a clad steel having superior strength and toughness of the base steel can be provided by specifying the phase fraction and the maximum ferrite grain diameter of the base steel. These findings have led to the completion of the present invention. The gist of the present invention is described below.

[1] A clad steel includes a base steel plate and a cladding metal of an alloy, the cladding metal being bonded to the base steel plate,

in which the base steel plate has a chemical composition containing, by mass%:

C: 0.06% to 0.15%,
Si: 0.10% to 0.60%,
Mn: 1.20% to 1.60%,
P: 0.030% or less,
S: 0.010% or less,
Al: 0.005% to 0.050%,
Mo: 0.05% to 0.15%,
Nb: 0.010% to 0.040%,
Ti: less than 0.005%,
N: 0.0010% to 0.0100%,
Cu: 0.10% to 0.50%, and
Ni: 0.10% to 0.50%, the balance being Fe and unavoidable impurities,

the ratio by mass% of Nb to N, i.e., Nb/N, is 2.0 to 10.0, Ceq represented by equation (1) below is in the range of 0.38 to 0.45,
the microstructure of the base steel plate contains a pearlite phase in an area fraction of 2% or less, a bainite phase and/or a martensitic phase in a total area fraction of 13% to 35%, and a ferrite phase in an area fraction of 65% to 85%, and
the base steel plate has a maximum ferrite grain diameter of 45 μm or less,

$$Ceq = C + Mn/6 + (Cu + Ni)/15 + Mo/5 \cdots(1)$$

(where in equation (1), symbols of elements indicate mass percentages of the respective elements).

[2] In the clad steel described in [1], the base steel plate further contains, by mass%, one or two selected from Cr: 0.01% to 0.40% and V: 0.001% to 0.050%, and Ceq represented by equation (2) below is in a range of 0.38 to 0.45,

$$Ceq = C + Mn/6 + (Cu + Ni)/15 + (Cr + Mo + V)/5 \cdots(2)$$

(where in equation (2), symbols of elements indicate mass percentages of the respective elements).
[3] A method for manufacturing the clad steel described in [1] or [2] includes:

a base steel plate material production step of heating a steel material having the chemical composition described in [1] or [2] to 1,180°C or higher and then rolling the steel material to produce a base steel plate material,
a heating step of heating a slab assembly to 1,050°C to 1,250°C, the slab assembly being formed by assembling the base steel plate material and a cladding metal material,
a rolled product formation step of subjecting the slab assembly to hot rolling at a reduction ratio of 3.0 or more to form a rolled product,
after allowing the rolled product to cool naturally, a reheating step of reheating the rolled product to 900°C to 1,150°C, and
a cooling step of cooling the base steel plate of the rolled product at a cooling rate of 0.1 °C/s or more and less than 1.0 °C/s.

[4] The method for manufacturing the clad steel described in [3] further includes after the cooling step, a step of reheating the rolled product to 500°C to 680°C.

Advantageous Effects of Invention

According to the clad steel of the present invention and the method for manufacturing the clad steel, high strength after stress relief annealing can be ensured by specifying Ceq and the amounts of C and Mo in the base steel plate, and the ferrite grains can be refined by specifying the pearlite phase fraction, resulting in a significant improvement in strength and toughness.

Description of Embodiments

Embodiments of the present invention will be described below. A clad steel has a structure in which a cladding metal is bonded to one or both sides of the base steel plate. Examples of the cladding metal include, but are not limited to, corrosion-resistant stainless steels and Ni alloys. Various alloys can be used in accordance with their applications. The chemical composition and the microstructure of the base steel plate will be described below.

The base steel plate has a chemical composition containing, by mass%, (a) C: 0.06% to 0.15%, (b) Si: 0.10 to 0.60%, (c) Mn: 1.20% to 1.60%, (d)P: 0.030% or less, (e) S: 0.010% or less, (f) Al: 0.005% to 0.050%, (g) Mo: 0.05 to 0.15%, (h) Nb: 0.010% to 0.040%, (i) Ti: less than 0.005%, (j) N: 0.0010% to 0.0100%, (k) Cu: 0.10% to 0.50%, (l) Ni: 0.10% to 0.50%, and (m) Nb/N: 2.0 to 10.0. The chemical composition will be described in detail below.

(a) C: 0.06% to 0.15%

C is an element that improves the strength of steel. A C content of 0.06% or more results in sufficient strength. The C content is preferably 0.07% or more, more preferably 0.08% or more. However, a C content of more than 0.15% leads to deterioration in weldability and toughness. Accordingly, the C content is 0.15% or less, preferably 0.14% or less, more preferably 0.12% or less.

(b) Si: 0.10% to 0.60%

Si is effective for deoxidization. To improve the strength of steel, the Si content is 0.10% or more, preferably 0.20% or more. However, a Si content of more than 0.60% leads to deterioration in the surface quality and toughness of the steel. Thus, the Si content is 0.60% or less, preferably 0.50% or less. Si is an element that inevitably enters steel from raw materials, such as iron ore. Thus, limiting the Si content to less than 0.10% leads to an increase in cost in the steelmaking process.

(c) Mn: 1.20% to 1.60%

Mn is an element that increases the strength of steel. Mn is less expensive than other strength-increasing elements, such as Ni and Cr. For this reason, desirably, Mn is actively added. Thus, the lower limit of the amount added is 1.20%, preferably 1.30%. However, a Mn content of more than 1.60% results in deterioration in weldability. Accordingly, the Mn content is 1.60% or less.

(d) P: 0.030% or Less

P is an unavoidable impurity in steel. A P content of more than 0.030% results in deterioration in toughness. P is preferably minimized as much as possible. A P content of up to 0.030% is acceptable. Accordingly, the upper limit of the P content is 0.030% or less, preferably 0.025% or less. To reduce the P content to less than 0.0001%, it takes a long time for a dephosphorization process in the course of preparing molten steel, leading to an increase in the production cost. For this reason, the P content is preferably 0.0001% or more. The P content is preferably in the range of 0.0001% to 0.025%.

(e) S: 0.010% or Less

Similar to P, S is also an unavoidable impurity in steel. A S content of more than 0.010% results in deterioration in toughness. S is preferably minimized as much as possible. A S content of up to 0.010% is acceptable. Thus, the upper limit of the S content is 0.010% or less, preferably 0.005% or less. To reduce the S content to less than 0.0001%, it takes a long time for a desulfurization process in the course of preparing molten steel, leading to an increase in production cost. For this reason, the S content is 0.0001% or more, more preferably 0.0003% or more.

(f) Al: 0.005% to 0.050%

Al is added as a deoxidizing agent. Al exhibits a deoxidizing effect when Al is contained in an amount of 0.005% or more. Thus, Al is added in an amount of 0.005% or more, preferably 0.010% or more. However, an Al content of more than 0.050% leads to deterioration in the toughness of a welded zone. Accordingly, the Al content is 0.050% or less, preferably 0.045% or less.

(g) Mo: 0.05% to 0.15%

Mo is an element that improves the hardenability of steel and increases the strength and toughness of the steel after rolling. Mo combines with C to form MoC and $Mo_2C$. These carbides are stable and thus effective in improving strength and toughness during stress relief annealing. This effect is provided at a Mo content of 0.05% or more. Thus, the Mo content is 0.05% or more, preferably 0.07% or more. However, a Mo content of more than 0.15% results in deterioration in weldability. Accordingly, the Mo content is 0.15% or less, preferably 0.13% or less.

(h) Nb: 0.010% to 0.040%

Nb precipitates in the form of Nb nitrides and is effective in suppressing the coarsening of austenite grains to improve the strength and toughness of steel. Nb also extends the recrystallization temperature range to a lower temperature during rolling in the austenite range, enabling refinement of crystal grains and thus an improvement in toughness. These effects are provided at a Nb content of 0.010% or more; thus, the Nb content is 0.010% or more. From the viewpoint of refining the crystal grains and improving the toughness, the Nb content is preferably 0.013% or more. However, a Nb content of more than 0.040% results in the formation of coarse Nb nitrides to deteriorate the toughness. Accordingly, the Nb content is 0.040% or less, preferably 0.030% or less from the viewpoint of suppressing the coarsening of Nb nitrides. When the ratio of Nb to nitrogen atoms is a predetermined value or higher as described below, the effect of suppressing the coarsening of austenite grains can be further provided.

(i) Ti: Less Than 0.005%

Ti as a single component forms carbides and nitrides, such as TiC and TiN. In the case of combined addition with Nb, complex carbides and complex nitrides of Ti and Nb are formed. In the base steel plate of the present invention, the Ti content is preferably less than the Nb content. It has been found that when Ti is used in combination with Nb, especially when 0.005% or more of Ti is added with 0.010% to 0.040% of Nb, coarse complex carbides and/or nitrides of Ti and Nb are formed to deteriorate the toughness. Accordingly, the Ti content is less than 0.005%, preferably 0.003% or less in view of the formation of carbides or nitrides.

(j) N: 0.0010% to 0.0100%

N is an essential element for the formation of Nb nitrides. A N content of 0.0010% or more results in the formation of Nb nitrides. Thus, the N content is 0.0010% or more, preferably 0.0020% or more in view of the formation of nitrides. However, a N content of more than 0.0100% results in deterioration in weldability and toughness. Accordingly, the N content is 0.0100% or less, preferably 0.0080% or less in view of deterioration in weldability and toughness. The N content is preferably in the range of 0.0020% to 0.0080%. When the ratio of Nb to N is a predetermined value or higher as described below, the effect of suppressing the coarsening of $\gamma$-grains (austenite grains) is considered to be further provided.

(k) Cu: 0.10% to 0.50%

Cu is an element effective in improving the hardenability of steel to improve the strength and toughness of the steel after rolling. Considering the economic efficiency and the amounts of other additive elements, the amount added is 0.10% or more, preferably 0.20% or more. However, a Cu content of more than 0.50% results in deterioration in weldability and toughness. Accordingly, the Cu content is 0.50% or less, preferably 0.40% or less.

(1) Ni: 0.10% to 0.50%

Ni is an optional component element that is effective in improving the hardenability of steel and especially in improving the toughness. Considering the economic efficiency and the amounts of other additive elements, the amount added is 0.10% or more, preferably 0.20% or more. However, a Ni content of more than 0.50% results in poor weldability and higher alloy cost. Accordingly, the Ni content is 0.50% or less, preferably 0.40% or less.

(m) Nb/N: 2.0 to 10.0

When the ratio by mass% of Nb to N, i.e., Nb/N, is 2.0 or more, the effects of the precipitation of Nb nitrides and the solute Nb are sufficiently provided. However, when Nb/N is less than 2.0, the presence of dissolved N in the steel significantly deteriorates the toughness. Accordingly, Nb/N is 2.0 or more. When Nb/N is more than 10.0, the amount of solute Nb in the steel increases, deteriorating the toughness. Accordingly, Nb/N is 10.0 or less, preferably 7.0 or less.

The above chemical composition is such that Ceq, which is an index value for the hardenability of the steel in equation (1) below, satisfies 0.38 to 0.45,

$$Ceq = C + Mn/6 + (Cu + Ni)/15 + Mo/5 \cdots(1)$$

(where in the equation, symbols of elements indicate mass percentages of the respective elements).

When Ceq is 0.38 or more, sufficient hardenability can be ensured to obtain good strength and toughness of the steel. Thus, Ceq is 0.38 or more, preferably 0.39 or more, more preferably 0.40 or more. However, when Ceq is more than 0.45, the weldability is deteriorated. Thus, Ceq is 0.45 or less, preferably 0.44 or less, more preferably 0.43 or less.

In addition, optional components may be added to the base steel plate as necessary in order to improve the properties. Specifically, the base steel plate may further contain, by mass%, one or two selected from the group consisting of Cr: 0.01% to 0.40% and V: 0.001% to 0.050% as optional components.

Cr: 0.01% to 0.40%

Cr is an optional component element that improves the hardenability of steel to increase the strength and toughness of the steel after rolling. The effect is provided at a Cr content of 0.01% or more. However, a Cr content of more than 0.40% results in deterioration in weldability and toughness. Accordingly, when Cr is contained, especially for the purpose of improving the strength and toughness of the steel, the Cr content is 0.01% to 0.40%. The Cr content is preferably in the range of 0.01% to 0.30%.

V: 0.001% to 0.050%

V is an optional component element that improves the strength of steel through the formation of carbonitrides. The effect is provided when the V content is 0.001% or more. Thus, when V is contained, especially for the purpose of improving the strength of the steel, the V content is preferably 0.001% or more, more preferably 0.005% or more. However, a V content of more than 0.050% results in deterioration in toughness. Accordingly, the V content is preferably 0.050% or less, more preferably 0.040% or less.

As mentioned above, when the optional components are contained in the base steel, the optional components are contained in such a manner that Ceq represented by equation (2) satisfies 0.38 to 0.45,

$$Ceq = C + Mn/6 + (Cu + Ni)/15 + (Cr + Mo + V)/5 \cdots(2)$$

(where in the equation, symbols of elements indicate mass percentages of the respective elements).

When Ceq is 0.38 or more, sufficient hardenability can be ensured to obtain good strength and toughness of the steel. Thus, Ceq is 0.38 or more, preferably 0.39 or more, more preferably 0.40 or more. However, when Ceq is more than 0.45, the weldability is deteriorated. Thus, Ceq is 0.45 or less, preferably 0.44 or less, more preferably 0.43 or less.

In the base steel plate according to the present invention, the balance is Fe and unavoidable impurities. Even if the base steel plate contains any one or more of Ca: 0.010% or less, B: 0.0050% or less, Sn: 0.050% or less, Sb: 0.050% or less, Zr: 0.050% or less, W: 0.050% or less, Co: 0.050% or less, Mg: 0.020% or less, and REM: 0.010% or less within these ranges, the properties of the base steel plate do not change significantly.

The appropriate composition range of the base steel plate of the clad steel has been described above. However, it is not enough to adjust the chemical composition of the base steel plate to the above ranges. The strength and toughness of the base steel plate can be improved by controlling the microstructure fraction and the maximum ferrite grain diameter of the base steel plate. The microstructure fraction and the maximum ferrite grain diameter of the base steel plate of the clad steel will be described below.

Area Fraction of Pearlite Phase: 2% or Less

It has been found that when a pearlite phase is formed, a coarse ferrite phase is formed around it. When the pearlite phase is 2% or less, the formation of the coarse ferrite phase can be avoided. For this reason, the area fraction of the pearlite phase is 2% or less, preferably 1% or less.

Area Fraction of Bainite Phase and/or Martensitic Phase: 13% to 35%

The bainite phase and the martensitic phase are needed to improve the strength and the toughness due to the refinement of the ferrite grains. The lower limit is 13% because the effect is provided at a fraction of 13% or more.

However, a higher fraction of the bainite phase and the martensitic phase results in an increase in the number of hard phases, causing deterioration in workability. Thus, the upper limit is 35%. Accordingly, the area fraction of the bainite phase and/or the martensitic phase is 13% to 35%, preferably 15% to 30%.

The microstructure of the balance of the base steel plate is the ferrite phase. The ferrite phase has an area fraction of 65% to 85%. The total area fraction of the pearlite phase, the bainite phase and/or the martensitic phase, and the ferrite phase is 100%.

The maximum ferrite grain diameter is 45 $\mu$m or less. The toughness is improved by refining the coarse ferrite grains in the microstructure. When the maximum ferrite grain diameter is 45 $\mu$m or less, a significant improvement in toughness is achieved. For this reason, the maximum ferrite grain diameter is 45 $\mu$m or less, preferably 40 $\mu$m or less.

A method for manufacturing a clad steel according to an embodiment of the present invention will be described below. A steel material for the base steel plate of the clad steel is adjusted to the chemical composition described above and obtained by, for example, usual steelmaking. The cladding metal is appropriately selected in accordance with a corrosive environment in which the clad steel is to be used. Examples of the cladding metal that can be used include corrosion-resistant alloys, such as austenitic stainless steels, e.g., SUS304L, SUS316L, and SUS317L; martensitic stainless steels, e.g., SUS410; ferritic stainless steels, e.g., SUS430; duplex stainless steels, e.g., SUS329J3L; and corrosion-resistant alloys, e.g., Ni alloys, for example, NW4400, NCF625, and NCF825, which are obtained by, for example, usual steelmaking. The base steel plate material and the cladding metal material are used to form a slab assembly for clad rolling (hereinafter, referred to as a "slab assembly").

The slab assembly can be produced by a known method. A stack having a structure of base steel plate material/cladding metal material/cladding metal material/base steel plate material is efficiently used for manufacture. In consideration of warping during cooling, desirably, the base steel plate materials have the same thickness to each other, and the cladding metal materials have the same thickness to each other. Of course, it goes without saying that there is no need to be limited to the assembly method described above.

The slab assembly assembled as described above is heated and then subjected to hot rolling. Specifically, the entire process is performed in the following order: (I) a base steel material production step, (II) a heating step, (III) a rolled product formation step, (IV) a reheating step, and (V) a cooling step. The conditions for the steps are described below. Regarding the temperature conditions in the present invention, the surface temperatures of the materials and the steel plates are used in all cases.

(I) Base Steel Material Production Step

The base steel material production step is a step of heating a steel material for the base steel plate, which has been adjusted to within the composition range described above, to 1,180°C or higher in the usual manner or the like, and then performing rolling. The heating temperature is set to 1,180°C or higher in order to reduce the microsegregation of the base steel plate and to ensure high toughness of the base steel plate. When a heating temperature of lower than 1,180°C, microsegregation of the steel material for the base steel plate formed during casting remains and good hardenability of a region having a low concentration of hardening-promoting components is not ensured, thereby coarse ferrite grains are formed to deteriorate the toughness of the base steel plate. To reduce the microsegregation in the base steel plate, the steel material for the base steel plate is heated to 1,180°C or higher, preferably 1,200°C or higher. The upper limit of the heating temperature is preferably, but not necessarily, 1,300°C or lower in consideration of the melting temperature of the steel for the base steel plate. The steel for the base steel plate is heated and then rolled to produce the base steel plate material.

(II) Heating Step

The heating step is a step of heating the slab assembly to 1,050°C to 1,250°C. Here, the slab assembly may be produced, for example, as described above. The heating temperature is set to 1,050°C or higher in order to ensure good bonding between the cladding metal and the base steel plate and good toughness of the base steel plate. When the heating temperature is 1,050°C or higher, rolling in a high-temperature range is advantageous for bonding the cladding metal to the base steel plate. When the heating temperature is lower than 1,050°C, a sufficient amount of rolling cannot be ensured in the high-temperature range, thus deteriorating the bondability. For this reason, the heating temperature is 1,050°C or higher in order to ensure good bonding between the cladding metal and the base steel plate. A heating temperature of higher than 1,250°C results in significant coarsening of crystal grains and deterioration in the toughness of the base steel plate. Accordingly, the heating temperature is 1,050°C to 1,250°C, preferably 1,100°C to 1,250°C.

(III) Rolled Product Formation Step

The rolled product formation step is a step of subjecting the slab assembly to hot rolling at a reduction ratio of 3.0 or more to form a rolled product. Here, the reduction ratio refers to the slab thickness (thickness of the slab assembly before rolling)/thickness of the clad steel after rolling. The reduction ratio is set to 3.0 or more in the hot rolling in order that a reduction ratio of 3.0 or more results in finer crystal grains in the base steel plate to improve the toughness of the base steel plate. The reduction ratio is preferably in the range of 4.0 to 20.0.

(IV) Reheating Step

By performing this reheating step and the next (V) cooling step in succession, the above-mentioned rolled product is subjected to normalizing heat treatment. The reheating step is a step of allowing the rolled product that has been hot-rolled at a reduction ratio of 3.0 or more to cool naturally in air and then reheating the rolled product to 900°C to 1,150°C. Here, "to cool naturally" indicates to expose the rolled product or the steel to air without forced cooling by water injection or the like, and to perform natural cooling without active cooling. Active cooling is to "actively perform cooling with a gas, a liquid, or a mixture thereof". From the viewpoint of improving pitting corrosion resistance, strength, or toughness, after the rolled product is allowed to be naturally cooled, preferably, no active cooling is performed before reheating.

The reheating after the hot rolling is to adjust the microstructure of the base steel plate. The reheating after the hot rolling makes the microstructure of the base steel plate homogeneous to improve the strength and toughness. A reheating temperature of lower than 900°C does not result in a homogeneous microstructure of the base steel plate. For this reason, the reheating temperature is 900°C or higher, preferably 930°C or higher. A reheating temperature of higher than 1,150°C results in coarse crystal grains in the base steel plate, causing significant deterioration in the toughness of the base steel plate. Accordingly, the reheating temperature is 1,150°C, preferably 1,100°C or lower.

(V) Cooling Step

The cooling step is a step of cooling the reheated rolled product, specifically, a step of cooling the base steel plate of the rolled product at a cooling rate of 0.1 °C/s or more and less than 1.0 °C/s. The cooling rate of the base steel plate after the reheating is set to 0.1 °C/s or more is to allow the base steel to have a microstructure containing 2% or less of the pearlite phase, 13% to 35% of the bainite phase and/or the martensitic phase in total, and 65% to 85% of the ferrite phase. However, a cooling rate of 1.0 °C/s or higher results in excessively high hardenability, and to ensure good workability, a tempering heat treatment step is required, thus leading to an increase in the number of steps and cost. Accordingly, the cooling rate of the base steel after the reheating is 0.1 °C/s or more and less than 1.0 °C/s. Any method can be employed as long as the base steel plate is cooled at the above cooling rate. For example, a known technique, such as spraying cooling water on the base steel plate side of the rolled product, can be used.

In the method for manufacturing the clad steel according to the present invention, the above-mentioned steps (I) to (V) are preferably performed in that order, and a known step may be further added between the steps if necessary. Furthermore, if necessary, (VI) a reheating step after cooling is performed after (V) the cooling step.

(VI) Reheating Step After Cooling

The reheating step after cooling is a step of reheating the rolled product to 500°C to 680°C after the above-mentioned (V) cooling step. The reason the reheating after cooling is performed is to understand the characteristics of the portion other than welded portion that has undergone post-weld stress relief heat treatment. The post-weld stress relief heat treatment is performed on the entire steel structure after welding, the portion other than welded portion is also exposed to the same heat treatment. For this reason, heat treatment simulating the post-weld stress relief heat treatment is performed to evaluate the properties in some cases. The reheating temperature is 500°C or higher because the effect of relieving the stress of the weld zone is not sufficient at lower than 500°C. A temperature of higher than 680°C may result in phase transformation of the base steel microstructure to deteriorate the toughness. Thus, the temperature is 680°C or lower. The holding time is appropriately determined in accordance with, for example, the heating temperature and the plate thickness.

The use of the method for manufacturing the clad steel enables the manufacture of the clad steel that can ensure the base steel plate having high strength and toughness after stress relief annealing. The method for manufacturing a clad steel can be any method in which all the steps are performed in the order of steps (I) to (V). If necessary, a known step may be further added between the steps.

EXAMPLE 1

Steels given in Table 1 below were prepared by steelmaking to produce base steel plate materials. Regarding a cladding metal material, one selected from SUS304L, SUS316L, SUS317L, SUS410, SUS430, SUS329J3L, NW4400, NCF625, and NCF825 was prepared by usual steelmaking. In Tables 1 to 3, underlined portions indicate that the items are outside the scope of the present invention, and blank cells indicate that the substances are not contained or are contained as unavoidable impurities.

[Table 1]

| Base steel No. | Chemical composition of base steel plate (mass%) | | | | | | | | | | | | | | | | | Remarks |
|---|---|---|---|---|---|---|---|---|---|---|---|---|---|---|---|---|---|---|
| | C | Si | Mn | P | S | Al | Mo | Nb | Ti | N | Cu | Cr | Ni | V | Nb/N | Ceq | |
| 1 | 0.15 | 0.49 | 1.44 | 0.020 | 0.003 | 0.037 | 0.12 | 0.015 | less than 0.001 | 0.0051 | 0.23 | | 0.36 | | 2.9 | 0.45 | Inventive steel |
| 2 | 0.06 | 0.43 | 1.56 | 0.024 | 0.002 | 0.044 | 0.07 | 0.024 | 0.002 | 0.0036 | 0.35 | | 0.31 | | 6.7 | 0.38 | Inventive steel |
| 3 | 0.09 | 0.50 | 1.48 | 0.016 | 0.005 | 0.050 | 0.10 | 0.017 | 0.003 | 0.0045 | 0.21 | | 0.50 | | 3.8 | 0.40 | Inventive steel |
| 4 | 0.10 | 0.20 | 1.42 | 0.022 | 0.004 | 0.016 | 0.09 | 0.014 | 0.001 | 0.0070 | 0.28 | | 0.38 | | 2.0 | 0.40 | Inventive steel |
| 5 | 0.10 | 0.35 | 1.60 | 0.017 | 0.003 | 0.017 | 0.10 | 0.022 | 0.002 | 0.0023 | 0.23 | | 0.26 | | 9.6 | 0.42 | Inventive steel |
| 6 | 0.11 | 0.41 | 1.30 | 0.022 | 0.003 | 0.010 | 0.11 | 0.026 | 0.003 | 0.0026 | 0.39 | | 0.35 | | 10.0 | 0.40 | Inventive steel |
| 7 | 0.11 | 0.24 | 1.49 | 0.012 | 0.002 | 0.015 | 0.15 | 0.019 | 0.001 | 0.0020 | 0.10 | | 0.10 | | 9.5 | 0.40 | Inventive steel |
| 8 | 0.12 | 0.44 | 1.46 | 0.025 | 0.002 | 0.012 | 0.05 | 0.021 | 0.002 | 0.0070 | 0.22 | | 0.22 | | 3.0 | 0.40 | Inventive steel |
| 9 | 0.14 | 0.36 | 1.32 | 0.025 | 0.002 | 0.011 | 0.07 | 0.040 | 0.001 | 0.0100 | 0.15 | | 0.15 | | 4.0 | 0.39 | Inventive steel |
| 10 | 0.09 | 0.36 | 1.36 | 0.024 | 0.004 | 0.016 | 0.13 | 0.010 | 0.003 | 0.0010 | 0.50 | | 0.33 | | 10.0 | 0.40 | Inventive steel |
| 11 | 0.09 | 0.22 | 1.46 | 0.014 | 0.010 | 0.017 | 0.10 | 0.016 | 0.004 | 0.0041 | 0.38 | | 0.28 | | 3.9 | 0.40 | Inventive steel |
| 12 | 0.09 | 0.22 | 1.38 | 0.023 | 0.002 | 0.037 | 0.12 | 0.020 | less than 0.001 | 0.0022 | 0.37 | 0.01 | 0.37 | | 9.1 | 0.40 | Inventive steel |
| 13 | 0.10 | 0.27 | 1.41 | 0.013 | 0.003 | 0.014 | 0.10 | 0.022 | 0.003 | 0.0078 | 0.34 | | 0.27 | 0.005 | 2.8 | 0.40 | Inventive steel |
| 14 | 0.09 | 0.45 | 1.54 | 0.011 | 0.002 | 0.029 | 0.12 | 0.025 | 0.001 | 0.0069 | 0.37 | | 0.20 | | 3.6 | 0.41 | Inventive steel |
| 15 | 0.16 | 0.45 | 1.30 | 0.019 | 0.004 | 0.036 | 0.08 | 0.028 | 0.002 | 0.0047 | 0.26 | | 0.27 | | 6.0 | 0.43 | Comparative steel |
| 16 | 0.10 | 0.24 | 1.55 | 0.013 | 0.002 | 0.026 | 0.04 | 0.015 | 0.001 | 0.0033 | 0.30 | | 0.21 | | 4.5 | 0.40 | Comparative steel |
| 17 | 0.10 | 0.48 | 1.49 | 0.023 | 0.002 | 0.041 | 0.07 | 0.041 | 0.002 | 0.0073 | 0.27 | | 0.34 | | 5.6 | 0.40 | Comparative steel |
| 18 | 0.11 | 0.25 | 1.40 | 0.019 | 0.002 | 0.041 | 0.08 | 0.009 | less than 0.001 | 0.0024 | 0.39 | | 0.35 | | 3.8 | 0.41 | Comparative steel |
| 19 | 0.11 | 0.40 | 1.32 | 0.017 | 0.002 | 0.037 | 0.10 | 0.029 | 0.005 | 0.0065 | 0.32 | | 0.20 | | 4.5 | 0.38 | Comparative steel |
| 20 | 0.10 | 0.38 | 1.43 | 0.021 | 0.002 | 0.035 | 0.08 | 0.032 | 0.001 | 0.0031 | 0.24 | | 0.31 | | 10.3 | 0.39 | Comparative steel |
| 21 | 0.11 | 0.29 | 1.42 | 0.013 | 0.005 | 0.026 | 0.10 | 0.012 | 0.002 | 0.0064 | 0.25 | | 0.21 | | 1.9 | 0.40 | Comparative steel |
| 22 | 0.14 | 0.33 | 1.43 | 0.019 | 0.007 | 0.033 | 0.14 | 0.019 | 0.002 | 0.0059 | 0.42 | | 0.31 | | 3.2 | 0.46 | Comparative steel |
| 23 | 0.07 | 0.35 | 1.43 | 0.016 | 0.005 | 0.043 | 0.11 | 0.023 | 0.002 | 0.0046 | 0.36 | | 0.29 | | 5.0 | 0.37 | Comparative steel |

After assembling the resulting base steel plate materials and the cladding metal materials to form slab assemblies, clad steels were manufactured by manufacturing methods given in Table 2. For each of the resulting clad steels, the cladding metal had a thickness of 2 mm to 4 mm, and the base steel plate had a thickness of 15 mm to 45 mm. In all cases, stress relief annealing was performed after the normalizing heat treatment, i.e., reheating and subsequent cooling. Test specimens were taken from the resulting clad steels and subjected to the following evaluations: (1) evaluation of the microstructure fraction of the base steel plate, (2) evaluation of the maximum ferrite grain diameter of the base steel plate, (3) strength evaluation, and (4) toughness evaluation.

[Table 2]

| Manufacturing method No. | Heating temperature of base steel plate material | Manufacturing conditions (heat treatment condition) | | | | | |
| --- | --- | --- | --- | --- | --- | --- | --- |
| | | Rolling conditions for product | | Normalizing heat treatment conditions | | Stress relief annealing conditions | |
| | Heating temperature (°C) | Heating temperature (°C) | Reduction ratio | Reheating temperature (°C) | Cooling rate of base steel (°C/s) | Heating temperature (°C) | Holding time (min) |
| 1 | 1200 | 1200 | 4.2 | 1000 | 0.3 | 630 | 600 |
| 2 | 1180 | 1150 | 5.0 | 950 | 0.4 | 600 | 600 |
| 3 | 1300 | 1250 | 6.8 | 930 | 0.6 | 630 | 600 |
| 4 | 1200 | 1050 | 7.4 | 950 | 0.5 | 630 | 600 |
| 5 | 1200 | 1200 | 3.0 | 980 | 0.3 | 630 | 600 |
| 6 | 1200 | 1150 | 10.8 | 1150 | 0.8 | 630 | 600 |
| 7 | 1200 | 1150 | 6.3 | 900 | 0.4 | 630 | 600 |
| 8 | 1200 | 1100 | 5.2 | 1050 | 0.9 | 630 | 600 |
| 9 | 1200 | 1200 | 4.0 | 1030 | 0.1 | 630 | 600 |
| 10 | 1200 | 1260 | 4.5 | 960 | 0.6 | 630 | 600 |
| 11 | 1200 | 1150 | 2.9 | 1060 | 0.8 | 630 | 600 |
| 12 | 1200 | 1200 | 6.7 | 1160 | 0.6 | 630 | 600 |
| 13 | 1200 | 1150 | 5.5 | 890 | 0.4 | 630 | 600 |
| 14 | 1200 | 1200 | 7.1 | 1000 | 0.04 | 630 | 600 |
| 15 | 1170 | 1150 | 3.5 | 1050 | 0.2 | 630 | 600 |

EP 4 032 998 A1

(1) Evaluation of Microstructure Fraction of Base Steel Plate

A test specimen for microstructure observation was taken from each of the clad steel plates in such a manner that the observation surface was perpendicular to a surface of the base steel plate and parallel to the rolling direction. The observation surface was polished and etched with a 3 vol% nital solution to expose the microstructure. The microstructure was observed under an optical microscope (magnification: 200×), and images thereof were captured. From the resulting microstructure photographs, the microstructure was identified by image analysis. The above metal microstructure observations were performed in 10 fields of view. The average of the area fraction occupied by each phase in the microstructure photographs in each field of view was used as the area fraction of each phase.

(2) Evaluation of Maximum Ferrite Grain Diameter of Base Steel Plate

The ferrite grain diameter was calculated for the ferrite phase in the microstructure photographs obtained by the metal microstructure observation described above, in accordance with the crystal grain diameter measurement method specified in JIS G0551. The metal microstructure observation was performed in 10 fields of view. The largest value of the ferrite grain diameter was used as the maximum ferrite grain diameter.

(3) Strength Evaluation

The strength of each base steel plate was evaluated by a tensile test. A JIS No. 1A tensile test specimen was taken from the region of the base steel plate only, where the cladding metal portion of the clad steel had been removed by machining, and a tensile test was performed. The base steel plate having a strength of 485 MPa or more was determined to have good strength.

(4) Toughness Evaluation

The toughness of each of the base steel plates was evaluated by the Charpy impact test. A 10 × 10 mm size V-notch Charpy impact test specimen as specified in JIS Z2242 was taken from the base steel plate and subjected to the Charpy impact test. The test specimen whose Charpy impact absorbed energy (vE-40) at -40°C was more than 100 J was determined to have good toughness.

Table 3 presents the test results.

[Table 3]

| Clad steel No. | Base steel No. | Manufacturing method No. | Pearlite phase fraction / % | Fraction of bainite phase and/or martensitic phase / % | Ferrite phase fraction / % | Maximum ferrite grain diameter / μm | Tensile strength of base steel plate / MPa | Charpy impact absorbed energy (vE-40) / J | Remarks |
|---|---|---|---|---|---|---|---|---|---|
| 1 | 1 | 1 | 0 | 29 | 71 | 39 | 531 | 134 | Inventive example 1 |
| 2 | 2 | 2 | 0 | 15 | 85 | 38 | 486 | 197 | Inventive example 2 |
| 3 | 3 | 3 | 0 | 20 | 80 | 37 | 494 | 170 | Inventive example 3 |
| 4 | 4 | 4 | 0 | 22 | 78 | 39 | 493 | 161 | Inventive example 4 |
| 5 | 5 | 5 | 0 | 22 | 78 | 38 | 500 | 164 | Inventive example 5 |
| 6 | 6 | 6 | 1 | 23 | 76 | 42 | 492 | 162 | Inventive example 6 |
| 7 | 7 | 7 | 0 | 23 | 77 | 38 | 494 | 157 | Inventive example 7 |
| 8 | 8 | 8 | 1 | 25 | 74 | 40 | 497 | 168 | Inventive example 8 |
| 9 | 9 | 9 | 2 | 28 | 70 | 45 | 487 | 123 | Inventive example 9 |
| 10 | 10 | 1 | 0 | 20 | 80 | 37 | 496 | 153 | Inventive example 10 |
| 11 | 11 | 1 | 0 | 20 | 80 | 39 | 492 | 184 | Inventive example 11 |
| 12 | 12 | 1 | 0 | 20 | 80 | 39 | 491 | 191 | Inventive example 12 |
| 13 | 13 | 1 | 0 | 22 | 78 | 40 | 493 | 168 | Inventive example 13 |

EP 4 032 998 A1

14

(continued)

| Clad steel No. | Base steel No. | Manufacturing method No. | Pearlite phase fraction / % | Fraction of bainite phase and/or martensitic phase / % | Ferrite phase fraction / % | Maximum ferrite grain diameter / μm | Tensile strength of base steel plate / MPa | Charpy impact absorbed energy (vE-40) / J | Remarks |
|---|---|---|---|---|---|---|---|---|---|
| 14 | 14 | 1 | 0 | 20 | 80 | 39 | 498 | 164 | Inventive example 14 |
| 15 | 15 | 1 | 1 | 31 | 68 | 39 | 507 | 71 | Comparative example 1 |
| 16 | 16 | 1 | 0 | 22 | 78 | 39 | 465 | 115 | Comparative example 2 |
| 17 | 17 | 1 | 0 | 22 | 78 | 40 | 493 | 43 | Comparative example 3 |
| 18 | 18 | 1 | 0 | 23 | 77 | 46 | 499 | 80 | Comparative example 4 |
| 19 | 19 | 1 | 1 | 23 | 76 | 42 | 490 | 59 | Comparative example 5 |
| 20 | 20 | 1 | 0 | 22 | 78 | 39 | 492 | 63 | Comparative example 6 |
| 21 | 21 | 1 | 1 | 23 | 76 | 47 | 492 | 61 | Comparative example 7 |
| 22 | 22 | 1 | 0 | 28 | 72 | 40 | 515 | 63 | Comparative example 8 |
| 23 | 23 | 1 | 0 | 17 | 83 | 40 | 473 | 41 | Comparative example 9 |
| 24 | 15 | 10 | 1 | 28 | 71 | 48 | 507 | 28 | Comparative example 10 |
| 25 | 15 | 11 | 1 | 28 | 71 | 47 | 508 | 18 | Comparative example 11 |
| 26 | 15 | 12 | 1 | 29 | 70 | 49 | 506 | 23 | Comparative example 12 |

(continued)

| Clad steel No. | Base steel No. | Manufacturing method No. | Pearlite phase fraction / % | Fraction of bainite phase and/or martensitic phase / % | Ferrite phase fraction / % | Maximum ferrite grain diameter / $\mu$m | Tensile strength of base steel plate / MPa | Charpy impact absorbed energy (vE-40) / J | Remarks |
|---|---|---|---|---|---|---|---|---|---|
| 27 | 15 | 13 | 1 | 30 | 69 | 39 | 505 | 34 | Comparative example 13 |
| 28 | 15 | 14 | 3 | 12 | 85 | 54 | 475 | 12 | Comparative example 14 |
| 29 | 1 | 15 | 2 | 25 | 73 | 48 | 501 | 58 | Comparative example 15 |
| 30 | 1 | 10 | 1 | 27 | 72 | 47 | 498 | 73 | Comparative example 16 |
| 31 | 1 | 11 | 1 | 28 | 71 | 47 | 504 | 76 | Comparative example 17 |
| 32 | 1 | 12 | 1 | 26 | 73 | 46 | 503 | 82 | Comparative example 18 |
| 33 | 1 | 14 | 3 | 24 | 73 | 47 | 498 | 68 | Comparative example 19 |

The clad steel Nos. 1 to 14, in which the chemical compositions of the base steel plates were within the scope of the present invention, exhibited good strength and toughness. The clad steel Nos. 15 to No. 23, in which the chemical compositions of the base steel plates were outside the scope of the present invention, had a strength of less than 485 MPa and/or a Charpy impact absorbed energy of less than 100 J and thus had inferior strength and/or toughness. The clad steel Nos. 24 to 33, in which the chemical compositions of the base steel plates and the conditions of the manufacturing method were outside the scope of the present invention, had a strength of less than 485 MPa and/or a Charpy impact absorbed energy of 100 J or less, and thus had inferior strength and/or toughness. As described above, it was possible to improve the strength and toughness even when the stress relief annealing was performed.

**Claims**

1. A clad steel, comprising a base steel plate and a cladding metal of an alloy, the cladding metal being bonded to the base steel plate,

   wherein the base steel plate has a chemical composition containing, by mass%:

   C: 0.06% to 0.15%,
   Si: 0.10% to 0.60%,
   Mn: 1.20% to 1.60%,
   P: 0.030% or less,
   S: 0.010% or less,
   Al: 0.005% to 0.050%,
   Mo: 0.05% to 0.15%,
   Nb: 0.010% to 0.040%,
   Ti: less than 0.005%,
   N: 0.0010% to 0.0100%,
   Cu: 0.10% to 0.50%, and
   Ni: 0.10% to 0.50%, the balance being Fe and unavoidable impurities,

   a ratio by mass% of Nb to N, i.e., Nb/N, is 2.0 to 10.0, Ceq represented by equation (1) below is in a range of 0.38 to 0.45,
   a microstructure of the base steel plate contains a pearlite phase in an area fraction of 2% or less, a bainite phase and/or a martensitic phase in a total area fraction of 13% to 35%, and a ferrite phase in an area fraction of 65% to 85%, and
   the base steel plate has a maximum ferrite grain diameter of 45 µm or less,

   $$Ceq = C + Mn/6 + (Cu + Ni)/15 + Mo/5 \quad \cdots(1)$$

   (where in equation (1), symbols of elements indicate mass percentages of the respective elements).

2. The clad steel according to Claim 1, wherein the base steel plate further contains, by mass%, one or two selected from Cr: 0.01% to 0.40% and V: 0.001% to 0.050%, and Ceq represented by equation (2) below is in a range of 0.38 to 0.45,

   $$Ceq = C + Mn/6 + (Cu + Ni)/15 + (Cr + Mo + V)/5 \quad \cdots(2)$$

   (where in equation (2), symbols of elements indicate mass percentages of the respective elements).

3. A method for manufacturing the clad steel according to Claim 1 or 2, comprising:

   a base steel plate material production step of heating a steel material having the chemical composition according to Claim 1 or 2 to 1,180°C or higher and then rolling the steel material to produce a base steel plate material,
   a heating step of heating a slab assembly to 1,050°C to 1,250°C, the slab assembly being formed by assembling the base steel plate material and a cladding metal material,
   a rolled product formation step of subjecting the slab assembly to hot rolling at a reduction ratio of 3.0 or more to form a rolled product,
after allowing the rolled product to cool naturally, a reheating step of reheating the rolled product to 900°C to 1,150°C, and
a cooling step of cooling the base steel plate of the rolled product at a cooling rate of 0.1 °C/s or more and less than 1.0 °C/s.

4. The method for manufacturing the clad steel according to Claim 3, further comprising after the cooling step, a step of reheating the rolled product to 500°C to 680°C.

<div align="center">**INTERNATIONAL SEARCH REPORT**</div>

| | International application No. |
|---|---|
| | PCT/JP2020/034960 |

**A. CLASSIFICATION OF SUBJECT MATTER**
C22C 38/00(2006.01)i; B23K 20/00(2006.01)i; C21D 8/00(2006.01)i; C21D
9/00(2006.01)i; C22C 38/16(2006.01)i; C22C 38/58(2006.01)i
FI:      C22C38/00 301Z; C22C38/16; C22C38/58; C21D8/00 B; C21D9/00 Z;
         B23K20/00 340
According to International Patent Classification (IPC) or to both national classification and IPC

**B. FIELDS SEARCHED**

Minimum documentation searched (classification system followed by classification symbols)
C22C38/00-38/60; B23K20/00; C21D8/00; C21D9/00

Documentation searched other than minimum documentation to the extent that such documents are included in the fields searched
       Published examined utility model applications of Japan           1922-1996
       Published unexamined utility model applications of Japan          1971-2020
       Registered utility model specifications of Japan                  1996-2020
       Published registered utility model applications of Japan          1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2000-1734 A (THE JAPAN STEEL WORKS, LTD.) 07 January 2000 (2000-01-07) | 1-4 |
| A | WO 2013/114851 A1 (JFE STEEL CORPORATION) 08 August 2013 (2013-08-08) | 1-4 |
| A | JP 2009-185368 A (THE JAPAN STEEL WORKS, LTD.) 20 August 2009 (2009-08-20) | 1-4 |
| P, A | WO 2020/071343 A1 (NIPPON STEEL STAINLESS STEEL CORPORATION) 09 April 2020 (2020-04-09) | 1-4 |
| P, A | WO 2019/189708 A1 (JFE STEEL CORPORATION) 03 October 2019 (2019-10-03) | 1-4 |

☐ Further documents are listed in the continuation of Box C.      ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 19 November 2020 (19.11.2020) | 01 December 2020 (01.12.2020) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

Information on patent family members

International application No.

PCT/JP2020/034960

| Patent Documents referred in the Report | Publication Date | Patent Family | Publication Date |
|---|---|---|---|
| JP 2000-1734 A | 07 Jan. 2000 | (Family: none) | |
| WO 2013/114851 A1 | 08 Aug. 2013 | JP 2013-177674 A<br>US 2015/0017476 A1<br>EP 2811045 A1<br>CN 104080937 A<br>KR 10-2014-0117547 A | |
| JP 2009-185368 A | 20 Aug. 2009 | EP 2128294 A1 | |
| WO 2020/071343 A1 | 09 Apr. 2020 | (Family: none) | |
| WO 2019/189708 A1 | 03 Oct. 2019 | JP 6652225 B1 | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4252645 B